(19) Europäisches Patentamt / European Patent Office / Office européen des brevets

(11) **EP 2 813 471 A1**

(12) **EUROPEAN PATENT APPLICATION**
published in accordance with Art. 153(4) EPC

(43) Date of publication:
**17.12.2014 Bulletin 2014/51**

(21) Application number: **12867738.2**

(22) Date of filing: **06.02.2012**

(51) Int Cl.:
***C01B 33/037*** *(2006.01)*

(86) International application number:
**PCT/JP2012/052647**

(87) International publication number:
**WO 2013/118249 (15.08.2013 Gazette 2013/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Silicio Ferrosolar, S.L.U.**
**28046 Madrid (ES)**

(72) Inventors:
• **KISHIDA, Yutaka**
  **Tokyo 100-8071 (JP)**

• **DOHNOMAE, Hitoshi**
  **Tokyo 100-8071 (JP)**
• **KONDO, Jiro**
  **Tokyo 100-8071 (JP)**
• **GOTO, Kiyoshi**
  **Tokyo 100-8071 (JP)**
• **OHASHI, Wataru**
  **Tokyo 100-8071 (JP)**

(74) Representative: **Elzaburu S.L.P.**
**C/ Miguel Angel, 21**
**28010 Madrid (ES)**

(54) **METAL OR SEMICONDUCTOR MELT REFINEMENT METHOD, AND VACUUM REFINEMENT DEVICE**

(57)     An objective of the present invention is, in refining a metal or a semiconductor melt, without impairing refining efficiency, to alleviate wear and tear commensurate with unevenness in a crucible caused by instability in melt flow, and to allow safe operation over long periods of time such that leakages from the crucible do not occur. Provided is a metal or semiconductor melt refining method, in which, by using an AC resistance heating heater as a crucible heating method, the melt is heat retained and mixed by a rotating magnetic field which is generated by the resistance heating heater. The metal or semiconductor melt refinement method and a vacuum refinement device which is optimal for the refinement method are characterized in that, in order that a fluid instability does not occur in the boundary between the melt and the bottom face of the crucible when the melt is rotated by the rotating magnetic field, with a kinematic viscosity coefficient of the melt designated v ($m^2$/sec), the radius of the fluid surface of the melt designated R (m), and the rotational angular velocity of the melt designated $\Omega$ (rad/sec), the operation is carried out such that the value of a Reynolds number (Re) which is defined as Re=R$\times(\Omega/v)^{(1/2)}$ does not exceed 600.

FIGURE 4

**Description**

**Technical field**

The present invention relates to a method and device for heating and melting, the molten raw material of metals or Semiconductor is having electrical conductivity, in order to remove impurities therefrom, specifically, it relates to a purification method and vacuum purification device of molten metals or semiconductors in a contrivance at enabling longer lasting crucibles used in the methods or devices.

**Prior Art**

Typical purification methods are vacuum metallurgical methods and slag refinement methods. Of these, the vacuum metallurgical method is a method wherein the molten raw material is in the crucible in a vacuum state, and the impurities in the melt are evaporated by evaporating the components with low vapour pressures from the surface of the melt. On the other hand, the slag refinement method involves the addition of a subsidiary raw material to the molten raw material in the crucible and forming a slag layer, either in the upper part or the lower part of the melt, and transitioning the impurities in the molten raw material to the slag side, utilising the differences in the chemical potential of the melt, and the slag interface.

In recent years, purification processes have been developed with the aim of increasing degrees of purity, and of these, in respect of the purification process of silicon raw material for use in solar cells, processing technology has been developed to enable a purity of greater than 6N (99.9999%) (Refer to non-patent references 3 and 4, and patent references 2 and 3), in particular, the performance of processes which can deal with components such as boron (B), and phosphorus (P) which have slow reaction speeds at the interface has become possible (Refer to non-patent reference 4, patent references, 3, 4, 5).

However, in the purification of silicon, in respect of elements with a high vapour pressure represented by phosphorus, there have been proposals for removal method thereof by holding the molten silicon at high temperature above the fusion point thereof in a vacuum furnace (referred to patent references, 3, 4, 5), but as the crucible, which can retain the melt cleanly in the vacuum conditions, those which can be furnished inexpensively are limited to those of quartz or graphite manufacture (Refer to patent references, 6, 7, 8).

Moreover, in processes for the purification of molten raw material of metals or semiconductors, stirring is normally performed on the melt (Refer to non-patent reference 1) in order to increase the purification efficiency. Because the exhaustion of impurities was performed only at the interface of the melt with the gaseous phase, or with the slag, it was desirable that the melt be stirred to transport the impurities in the melt efficiently to the interface.

The mechanical stirring of the melt was normally enabled using stirring materials such as paddles and impellers. However, the fusion point of metals and semiconductor raw materials are high temperatures in addition to many of them being chemically reactive, such that the lifetime of the stirring members, or the stirring materials, or the impurities in the stirring materials, dissolved into the molten raw materials, and this became an impediment to the original object of purification in many cases. For that reason, in the purification of metals and semiconductors, because the melt itself was electrically conductive, methods where the melt was stirred without contact there with by means of alternating current magnetic fields were widely used. The embodied devices stirring the melt by means of an alternating current magnetic field can be classified into inductive furnaces by means of permanent magnets, and electromagnetic stirring devices by means of mobile magnetic fields.

Of these, the induction furnaces generate an induced current in the melt, and at the same time as enabling stirring by means of the concomitant Lorentz forces therewith, they employ Joule heating by means of induction currents, and furnaces employing this format are mostly termed inductive heating furnaces. The classic configuration of these furnaces, have water cooled solenoid coiled several times to several tens of times around the outer side of the refractive material in the circumference of the crucible, and an alternating current is caused to flow in this coil at a frequency of several hundred to several KHz. These furnaces can adjust the distribution of the thermal energy injected to the melt, and the dynamic energy of the stirring, to some extent by means of the frequencies, and when the frequencies are low, the stirring effectiveness is great, and when the frequencies are high, the heating effectiveness is great.

There have been proposals for devices stirring molten silicon which do not employ forceful stirring in the manner of induction furnaces, in addition to not employing externally attached induction heating devices, but generate a mobile magnetic field in the melt in the crucible by employing three-phase current in a resistance heater disposed so as to surround the crucible in the interior of the furnace, and the melt in the crucible is revolved (Refer to patent reference 6).

Magnetic stirring devices dispose coils for use in generating mobile magnetic fields on the outer peripheral side of the crucible or furnace. Because these devices enable heating of the melt by the mere stirring of the melt, the dimensions of the design of the mobile magnetic field are great, and facilitate the adjustment of the stirring capacity. The classic equipment of this type is the ASEA-SKF furnace, and other than the revolving magnetic field device disclosed in non-patent reference 2, there also have been proposals for a device disclosed in patent reference 1.

In this manner, normally the molten metal or semiconductor having electrical conductivity is held in the crucible in the molten state, and in processes purifying this melt by means of slag reactions or gaseous reactions, and electromagnetic forces are employed in methods to stir the melt by non-contact means in order to make the refining reactions efficient and prevent contamination by impurities.

**Prior art references**

**Patent references**

Patent reference 1: Japanese laid open unexamined patent publication H10-25190
Patent reference 2: WO 2008-031229
Patent reference 3: Japanese laid open unexamined patent publication 2005-231956
Patent reference 4: Japanese laid open unexamined patent publication 2006-315879
Patent reference 5: Japanese laid open unexamined patent publication 2007-315879
Patent reference 6: Japanese laid open unexamined patent publication H10-25190
Patent reference 7: Japanese laid open unexamined patent publication H09-309716
Patent reference 8: Japanese laid open unexamined patent publication 2005-281085

**Non-Patent references**

Non-Patent reference 1: J. Szekely, Fluid Flow Phenomena in Material Processing, P.191 (1979) Academic Press.
Non-Patent reference 2: Revolving magnetic field devices, Shigeo ASAI, An introduction to magnetic materials processing (2000) Uchida Rokakuho
Non-Patent reference 3: J.R. Davis et.al., IEEE Trans. Elec. Dev. ED27, 677 (1980)
Non-Patent reference 4: N. Yuge et al., Solar Energy Materials and Solar Cells 34, 243 (1994)

**Outline of the invention**

**Problems to be solved by the invention**

However, the following problems occurred in the purification methods using the conventional stirring technology of the electomagnetic fields.

The first problem which needs to be addressed is the erosion of the crucible. In other words, when the induction furnaces purifying large volumes of raw material with a high fusion point in the crucible, the stirring function of the melt was excessive, and the erosion of the crucible was great. The mechanism of this erosion of the crucible is not clear, but it is understood as follows.

The norm is that there is instability accompanying the fluid flux when there is an excess of stirring, and the erosion of crucibles with frequent excess of stirring proceeds non-uniformly. As a result, remarkable undulations are formed in the surface of the crucible. The undulating means causes the concentration of thermal stress, destroying the crucible and generating leakage of the melt. In particular, in relation to the use of high-frequency, high-capacity crucibles, this stirring becomes excessive from the point of view of energy efficiency as a result of the skin effect of the alternating current, and erosion is frequently generated. Because of this, in refining over an extended period, the amount of erosion becomes great, and it is difficult to deal with it by thickening the crucible.

Moreover, as the second problem, in the case of both quartz and graphite, because there is some fusion thereof by the melt, in processes aiming for a high degree of refining, the process limiting velocity is the interface reactions which are directly related to the removal of the impurities, rather than the stirring, and in that event, the problems with the erosion of the crucible as a result of excess of stirring, and the unintended mixing of the impurities from the crucible with the purified raw materials, have been identified.

In consideration of the problems identified above, the establishment of technology to restrict the erosion of the crucible to a minimum is a very important issue. In particular, this problem is of paramount importance in the refining of silicon for use in solar cells which has been increasingly performed in recent years.

Therefore, the present invention, in respect of refining of metals and semiconductor materials, has as its object, sustaining sufficient stirring capacity for the refining reactions, in addition to, enabling the suppression of the erosion of the crucible in the provision of a refining method and vacuum refining devices.

**Summary of the invention**

For that reason, the inventors focused on the fluidity, and the flow configuration, as well as, the domain known as the so-called Ekman layer. Then, by ensuring that an instability phenomenon of the Ekman flow at the interface of the basal surface of the crucible and the melt resulting from the revolution of the melt does not occur, such that a stirring capacity sufficient for the refining reactions is sustained, so as to be neither excessive insufficient, and discovered that it was possible to suppress the erosion of the crucible to a minimum of as a result of that, in completion of the present invention.

In other words, the present invention is a purification method of molten metals or semiconductor performing purification while stirring the molten metal or semiconductor contained in a crucible heated by a heater disposed so as to surround the outer wall of the crucible by means of a magnetic field, characterized by performing so as not to exceed a Reynolds number Re value of 600 as represented by the following equation (2), when the dynamic viscosity coefficient of the fused liquid is v ($m^2$/sec.), the radius of the liquid surface of the fused liquid is R (m), and the rotational angular velocity of the fused liquid is $\Omega$ (rad/sec.):

$$\mathrm{Re} = \mathrm{R} \; x \; (\Omega/v)^{\wedge}(1/2) \qquad \cdots (2)$$

Moreover, the present invention provides a vacuum purification device disposing a crucible for the insertion thereto of the subject of purification comprising metal or a semiconductor, and a resistance heater heating and fusing the subject of purification in said crucible holding said crucible and having a circular aperture means, and thermal insulation materials disposed so as to surround the periphery of said resistance heater all disposed in a vacuum vessel, characterized by said resistance heater being provided extending from a central heating element disposed on the basal centre of the crucible, and having three basal means arc shaped heating elements disposed so as to be along substantially three equal parts around the basal means outer wall surface of the crucible, and three torso means arc shaped heating elements disposed so as to be along three equal parts of the torso means outer wall surface and disposed substantially parallel to the basal means arc shaped heating elements, and mutually connected heating elements connecting each of the basal means connected heating elements and the torso means arc shaped heating elements provided extending from the tip terminals of the basal means arc shaped heating elements, and the three torso means arc shaped heating elements are provided with electrode terminal connecting the electrodes to the tip terminal of the opposite side to the respective connection heating elements forming a three-phase current circuit, moreover, with a distance h between the centre of the horizontal cross section of the basal means arc shaped heating elements and the centre of the horizontal cross section of the torso means arc shaped heating elements, and a radius a of the centre line circle formed connecting the centre of the cross sections of the three torso means arc shaped heating elements, then h/a is less than or equal to 0.3, in addition to the distance between the basal means arc shaped heating elements and the torso means arc shaped heating elements being equal to or greater than 20 mm.

Firstly, the reason why the fluidity was focussed on in the present invention is as follows.

In other words, the erosion of the crucible in the purification performed while stirring the molten metal or semiconductor using a revolving magnetic field wears away the crucible by means of fusion thereof or chemical reaction at the interface of the material of the crucible and the melt, and the velocity of that erosion is determined by a thermodynamic index, for example, of the temperature or concentration and the like, but in an actual process device the transport of the substance is the rate limiting factor in many cases, and the fluidity of the melt has a big impact in practice. Therefore, when there is fluidity, a greater erosion occurs because of the promotion of the substance transport at the interface with the melt.

Moreover, the reason why the fluid conformation was focussed on in the present invention is as follows.

In other words, there are differences in the conformation of the laminar flow, the flow instability and the chaotic flow in the fluidity, and because the conformation of the erosion also reflects the fluid conformation of the melt, the velocity of the erosion is not a simple ratio with the flow velocity, and changes with the conformation of the fluidity. For example, a flow instability with a structure causes localized heterogeneous erosion, and creates a heterogeneous interface, and simultaneous with the creation of an increased surface area of the interface resulting from that heterogeneity, there is a mild impediment to the fluidity of the melt, such that additional erosion is facilitated, and the velocity of that erosion has the characteristics of accelerating exponentially.

Furthermore, the reason why the domain termed the Ekman layer was focussed on in the present invention is as follows.

Because the viscosity of the melt of the molten metals or semiconductors is very low, in respect of stirring using a magnetic field, most of the melt in the crucible has a fixed angular velocity and can be considered to rotate as a rigid body. Because the flow velocity at the interface with the static crucible must not be zero, it is known that a domain is generated which is termed an Ekman layer between the domain of the revolution of the rigid body and the inner surface of the crucible (Refer to H. P. Greenspan, The theory of rotating fluids, (1966) Cambridge Univ. Press).

Hereafter, the present invention which was conceived of in consideration of fluidity, the configuration of the flow and the so-called Ekman layer is explained.

Firstly, The thickness δe of the Ekman layer has a revolving angular velocity of the melt of Ω (rad/sec), a dynamic viscosity coefficient of the melt of v (m$^2$/sec) which is expressed by the following equation (1):

$$\delta e = (v/\Omega) \char`\^ (1/2) \qquad \cdots (1)$$

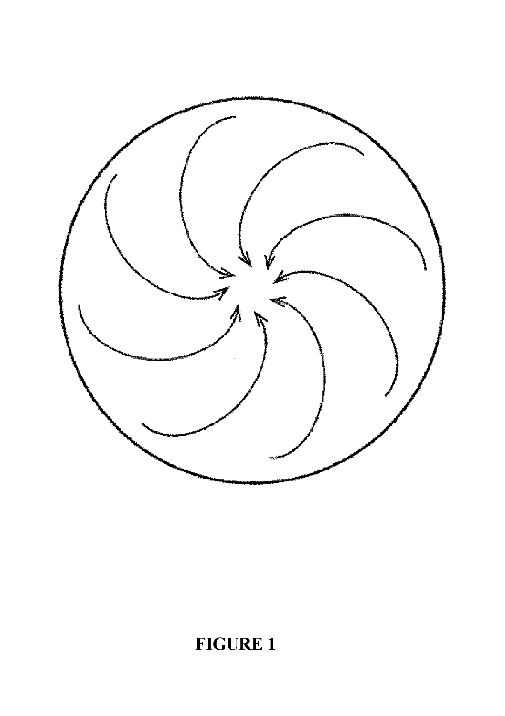

In the revolving domain of the rigid body there are almost no components towards the revolution centre, but in the interior of the Ekman layer there are components in the flow towards the central part of the crucible. Therefore, in respect of the vicinity of the lower surface of the crucible, there is a flow generated which defines a helix towards the centre from the outer periphery of the crucible as illustrated in Figure 1.

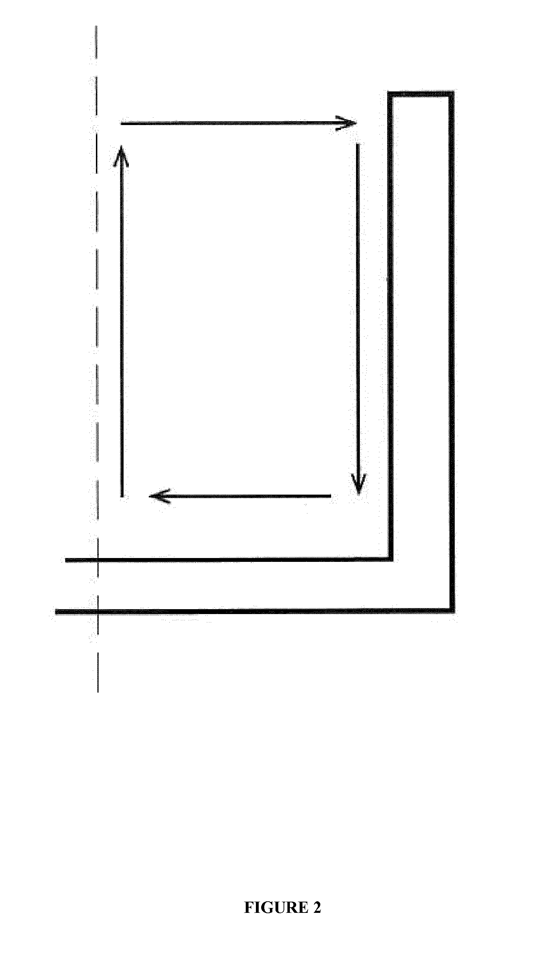

The flow concentrating in the lower central means of the crucible at the bottom surface ascend the central axis of the crucible to emerge at the free surface, and conversely is a flow defining a spiral from the inner wall to the outer peripheral side descending along the crucible inner wall side surface, and causes a secondary flow defining a spiral once more in a circulating flow to the centre of the crucible. Figure 2 represents the look of this secondary circulation in a cross section of the centre of the crucible.

The erosion of the inner wall surface of the crucible is considered to be affected by the flow of the interface layer, but this domain is a location where the changes in the velocity of the flow are great, and is a domain where most of the instability of the flow of the melt is generated, and it is known that this instability is termed the Ekman flow instability and is known to have a unique fluidity pattern. For example, there is a demonstration of a visualized Ekman layer unstable flow pattern in P. J. Thomas and F. Zoueshtiagh, J. Eng. Math. 57, 317 (2007), etc., but the inventors discovered that this pattern resembles the erosion pattern of the actual crucible.

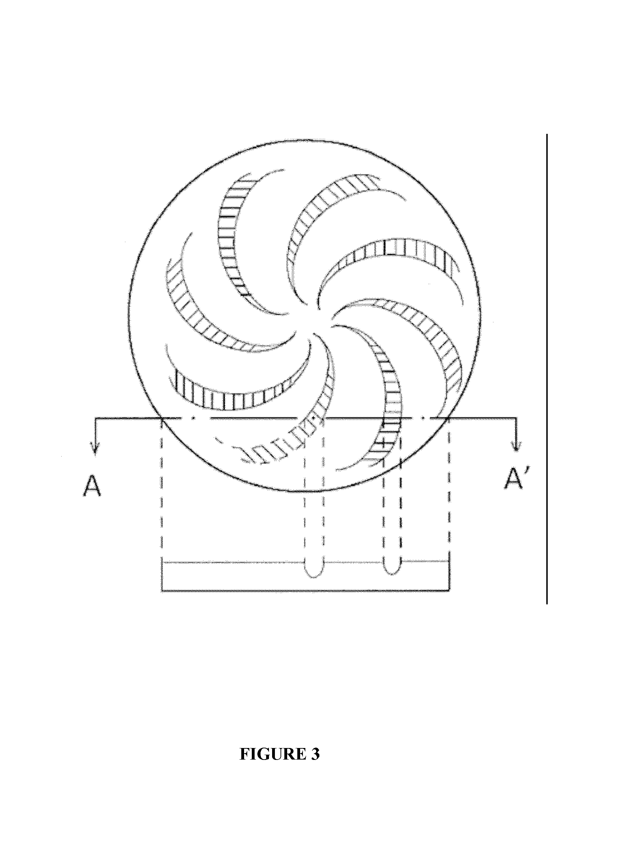

Figure 3 represents a sketch of the bottom inner surface of a graphite crucible after use in the purification of silicon, and innumerable indentation stripes are formed by this erosion, and it is considered that the characteristics of the flow of the Ekman layer are reflected in the morphology of that erosion.

When this type of erosion having indentations proceeds further, the concentration of the thermal strain in these indentations becomes so great as cannot be ignored, and in brittle crucibles like those made of graphite this generated fractures, and there is a great danger that the melt can leak therefrom.

Because the conditions for the generation of unstable flow are influenced by the size of the domains under consideration (representative length), the viscosity of the melt being handled and the velocity of the flow, in general, if the representative length is L, the dynamic viscosity coefficient of the fluid is v, and the representative velocity is U, it is determined by the value of the Reynolds number Re which is a computable dimensionless number.

The inventors consider that the representative length which is considered a problem in this process (Purification of metals and the like) is the interface layer thickness δe represented in equation (1), and that it is appropriate to take the peripheral velocity of the melt surface as the representative velocity. Therefore, when the radius of the melt surface is R (m), and the revolving angular velocity of the melt is Ω (rad/sec), then because the representative flow velocity U is:

$$U = \Omega \times R,$$

The Reynolds number used in the earlier equation (1) is as represented in the following equation (2):

$$Re = U \times \delta e/v = \Omega \times R \times \delta e/v = R \times (\Omega/v) \char`\^ (1/2) \cdots (2)$$

In this equation (2), because the Reynolds Re is determined by the revolving angular velocity Ω of the melt which is an operational parameter in accordance with the size of the vessel and the raw materials in use, if the raw materials to be used and the size of the crucible are determined, the generation of flow instability is determined by the revolving angular velocity, and this implies that the risk of the generation of instability is greater with greater rotation angular velocity of the melt.

From experimental results of the experiments performed by the inventors in purification devices, the Re conditions generating flow instability wherein the erosion of the crucible proceed exponentially was found to be when the Re values of the Reynolds number defined in equation (2) is greater than 600. Therefore, the suppression of the erosion of the crucible by the prevention of the generation of instability by operating under condition wherein Re < 600, in accordance with the dynamic viscosity coefficient of the raw materials in use and the inner radius of the crucible used is enabled. Now in relation to the lower limit of the Reynolds number Re, the lower the Reynolds number, the lower the erosion of the crucible, but in order to secure the stir functionality of the melt, the inertial forces acting on the melt need to exceed the viscous forces, and from the definition of the Reynolds number (Re = Inertial forces/viscous forces) this value must be greater than 1, and more preferably greater than 10.

Here, in order to comprehend the Re values, it is necessary to know the revolving angular velocity $\Omega$ of the melt, but this can be easily derived by directly counting the revolutions of the impurities and the like floating freely on the surface of the melt for a unit time period by observing the melt surface in the crucible. Moreover, because the temperature perturbations resulting from thermal counter flow of the melt surface revolve almost with the revolution of the melt, by continuously measuring the temperature variation of the melt surface using a radiation temperature sensor, it can be derived by analyzing the peak frequency of that time sequence signal.

If the revolving angular velocity during the operations is great, and the value of Re is greater than the limit value, the revolving angular velocity $\Omega$ need only be reduced, to cause the Re value to be less than the limit value.

On the other hand, theoretically, it is known that the computed revolving angular velocity $\Omega c$ (rad/sec) of the melt, when the mean strength B (Telsa) of the revolving magnetic field in the melt generated by the heater , the frequency f (Hz) of the alternating current used in the heater, and the number of poles of the revolving magnetic field as a result of the disposition of the heater is n, it can be estimated as in equation (6) (P.A. Davidson, and J. C. R. Hunt, J. Fluid Mech., 185, 67, (1987)). Then, the performance of the purification of metals or semiconductors is preferably performed so that the value of the Reynolds number Re represented by the equation (2') below does not exceed 600.

$$\Omega b = 2 \times \pi \times f \times n \qquad \cdots (4)$$

$$V = \Omega b \times R \times ((\sigma B^2/(16 \times \Omega b \times \rho)) ^ (1/2) \qquad \cdots (5)$$

$$\Omega c = (V/R) \times (0.88 \times Ln(V \times R/v) + 1) \qquad \cdots (6)$$

$$Re = R \times (\Omega c/v) ^ (1/2) \qquad \cdots (2')$$

Here, the $\Omega b$ of equation (4) are the revolutions (rpm) of the rotating magnetic field, v is the coefficient of dynamic viscosity of the melt ($m^2$/sec), $\sigma$ is the electrical conductivity ($1/\Omega m$) of the melt, $\rho$ is the density of the melt ($Kg/m^3$), R is the radius of the molten surface of the melt (m), and the V in equation (5) is the representative velocity. Moreover, Ln is the natural logarithm, ^ represents the exponential.

As can be appreciated from these equations, it is sufficient for B to be made sufficiently small. In order to reduce the theoretical estimated value $\Omega c$ of the revolving angular velocity of the melt, so as to reduce Re to below 600, but this is achieved by reducing the current flowing through the heater. The reduction of the current means that the electrical power is supplied to the resistance heater is reduced. Effectively this is like performing the operations at a lower temperature. However, because low temperature operation reduces the reaction velocity at the interface, this may result in adversely affecting the efficiency of the purification process. For that reason, when these types of problems arise, as described below, they can be dealt with by facilities improvement, such as improvement of the materials in the furnace.

Firstly, there is the measure of increasing the material thickness of the thermal insulation material in the furnace, and by a method wherein this material is replaced by a material with lower thermal conductivity, and by means of the addition of the radiated heat blocking panel and the like, wherein the thermal insulating capacity between the crucible and the furnace wall may be enhanced. By these measures, the operations are enabled while sustaining the desired temperature of the melt, in addition to suppressing the revolving angular velocity of the melt at a lower electrical power.

Secondly, there is the modification of the configuration of the resistance heater employed. For example, by increasing the resistance value of the heater by either reducing the cross-sectional area of the heating element or extending the length of the resistance heater, operations are enabled at a lesser current, while sustaining the heating power, enabling a rotational angular velocity of the melt, which is less than the conditions of equation (2).

Moreover, when there is a configuration having part of the heating element of the heater folded over, there is the disposition of the element adjacent to the element, in addition to the orientation of the current in each of the folded over parts being mutually opposite, such that the magnetic field generated from each heating element cancel each other out, and the strength of the magnetic field received by the melt can be reduced. For example, is, when the resistance heater is disposed in the basal centre of the crucible in a basal means central heating element, by disposing 3 basal means arc shaped heating elements extending therefrom along substantially 3 equal parts in the periphery of the basal outer wall surface of the crucible, the basal arc shaped heating elements are positioned to substantially in parallel, and by disposing three torso means arc shaped heating elements, so as to be along substantially three equal parts in the periphery of the torso means outer wall surface of the crucible, when a three-phase alternating current circuit is formed extending from the tip terminals of the basal means arch shaped elements having the connection of a contact heating element to each of the basal means contact heating element and the torso means arc shaped heating elements, because the orientation of the current flow in the basal means arc shaped heating element and the torso means arc shaped heating element via they connection heating element are reversed, the strength of the magnetic field received by the melt is reduced, and is more preferable.

In particular, as a result of the inventors developments while repeating trial and error, it was discovered that when the distance is h between the centre of the cross-section of the basal means arc shaped heating element, and the centre of the cross-section of the torso means arc shaped heating element, and when the radius of the centre line circle formed connecting dissenters of the cross sections of the three torso means arc shaped heating elements is a, if h/a is less than 0.3, in addition to, when the distance between the basal means arc shaped heating element and the torso means arc shaped heating element being greater than 20 mm in the resistance heater, the purification processes could be performed efficiently, while ensuring that the critical angular velocity is not exceeded, so that the Reynolds number Re does not exceed 600.

In addition, even when the heater is disposed at a position distal from the crucible, the strength of the magnetic field in the melt can be suppressed while maintaining the heating capacity, enabling a reduction in the revolving angular velocity of the melt.

Thirdly, there is the modification of the substance specification of the crucible employed. As the materials of the crucible, because the magnetic field in the melt can be weakened by the magnetic shielding effect of the crucible, by increasing the material thickness of the crucible, or employing materials with high electrical conductivity as the materials of the crucible, the strength of the magnetic field in the melt can be suppressed while sustaining the heating capacity, enabling a reduction in the revolving angular velocity of the melt.

Starting with the three measures raised above, so the revolving angular velocity of the melt is not exceed the critical value causing flow instability of the melt as represented above, by enabling the three improvement measures described above, by enabling the three improvement measures described above, a design of the device was enabled which had improved efficiency, including the disposition in the furnace of the thermal insulation material in the furnace and of the crucible, and [improvements] in regard to the heater, based on the relationships of $\Omega c$ and B, as represented in equation is (5) and (6) shown above were enabled, as well as these configurations. In reality, the strength of the magnetic field generated in the melt by the resistance heater (the mean value B of the magnetic field strength) could be precisely computed using the widely used numerical values in the simulation packages (J-MAG, ANSYS-Emag, VF-Opera and the like) for the analysis of the distribution of the magnetic field.

Moreover, in the purification method of metals and semiconductor melt of the present invention, as a result of accumulated operations over a number of times, from the perspective of preventing the continued erosion in a fixed direction of the basal means of the crucible (right-handed spiral or left-handed spiral) in the performance of purification operations, it was possible to add reversal operations of the revolving direction of the melt in the crucible at any interval. In other words, when the melt in the crucible revolved clockwise, as seen from above the crucible and was reversed to the anticlockwise direction during the process, moreover, when switched from an anticlockwise direction to clockwise direction, these operations were performed at specific intervals, and it was found that the revolving direction of the melt in the crucible could be beneficially reversed.

In order to reverse the revolving direction of the melt in the crucible, for example, when a revolving magnetic field is generated by three phase current electrical power supplied to the resistance heater, the revolving direction of this revolving magnetic field need only be reversed. Specifically, if any, two of the three cables of the three-phase current are crossed over, the revolving symmetry of the three cables causes reversal of the revolution. Of course, other methods than switching-over the cables may be employed, and the performance of any kind of switching-over of the alternating power source, while leaving the cable connections as is, may enable their reversal of the revolving direction of the revolving magnetic field.

**Effectiveness of the invention**

In purification methods employing a revolving magnetic field, the main cause of the increase in the erosion of the crucible is the Ekman flow instability phenomenon, and preventing the occurrence of this instability phenomenon is remarkably effective in enabling a marked suppression of the erosion velocity of the crucible.

Moreover, by performing operations at conditions which do not exceed the critical conditions generating instability of the flow, there is the remarkable effect of the substantial lengthening of the lifetime of the crucible, enabling the retention of the morphology thereof, so as to proceed at a set velocity while retaining a smooth morphology, without aggravating the accelerated erosion of the crucible resulting from flow instability.

In the refinement of metals and semiconductor materials, the refinement of an increased amount of raw material was enabled continuously with one crucible, while maintaining sufficient stirring capacity of the melt for the refining reactions, in addition to suppressing the wear of the crucible to a minimum, and a remarkable effectiveness was enabled in terms of associated material costs based on the crucible material, the time required to replace crucibles, the utilities costs for electrical power and the like, resulting in reduced operational losses.

Moreover, prevention of events of leakage of melt by the breakdown of the crucible caused by the concentration of thermal stress concomitant with the deepening indentations caused by erosion was enabled, and a remarkable effectiveness due to safe long-term continuous operations being enabled.

In addition, as a result of this, there was the remarkable benefit of the enablement of a contribution to the supply of high purity metal material or semiconductor material at a cheaper price.

## Brief description of the drawings

Figure 1: A schematic drawing of the flow pattern in the boundary layer of the bottom of the crucible
Figure 2: A schematic drawing of the secondary reflux flow of a cross section of the crucible
Figure 3: A schematic drawing of the encroachment state of the crucible basal surface
Figure 4: A cross section drawing of the purification furnace
Figure 5: A drawing of the outer appearance of the assembled heater
Figure 6: A parts drawing of the heater
Figure 7: An electrical circuit drawing of the heater
Figure 8: A drawing of the outer appearance of the assembled heater used in the second embodiment
Figure 9: A cross section drawing of the crucible used in the comparative example 1
Figure 10: A cross section drawing of the crucible used in the third embodiment
Figure 11: A drawing representing the positional relationship of the bottom means arc shaped heating element and the arc shaped heating element of the heater torso means
Figure 12: A drawing representing the relationship of the heater h/s values to the magnetic field strength of the inner means side

## Embodiments of the invention

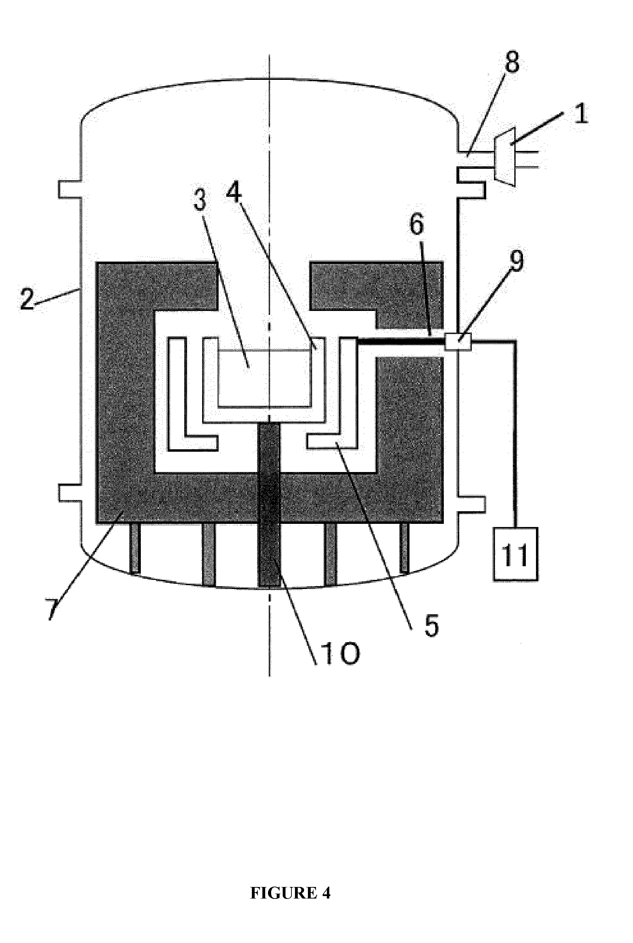

The purification device employed for the purification of molten metals or semiconductors employing the purification methods of the present invention, for example, as illustrated in figure 4, employs vacuum, and by the evaporation of the impurities from the molten raw materials of the metals or semiconductors, the purity of these raw materials could be raised. This device has a symmetrical revolving axis type configuration, and the raw material 3, which is the subject of purification is loaded to the crucible 4, and a resistance heater 5 is disposed so as to surround the outer side of this crucible 4. By passing current through and heating this heater 5, the raw material 5 in the crucible 4 is fused by means of the radiated heat, in addition to, enabling heating to a temperature where at the impurities are efficiently evaporated.

Moreover, in order to efficiently vaporize the impurities, the heater 5 and the crucible 4 with the raw material 3 therein in a state surrounded by the thermal insulation material 7 are disposed within a vacuum container 2. The gas exhaust port 8 is provided on the upper means of the vacuum vessel 2 and the configuration is one wherein the vacuum pump 1 is connected to that location. Furthermore, an the electrode port 9 is provided on the vacuum vessel 2 in order to supply the electrical power through to the heater electrode 6, and is connected to the heating power source 11.

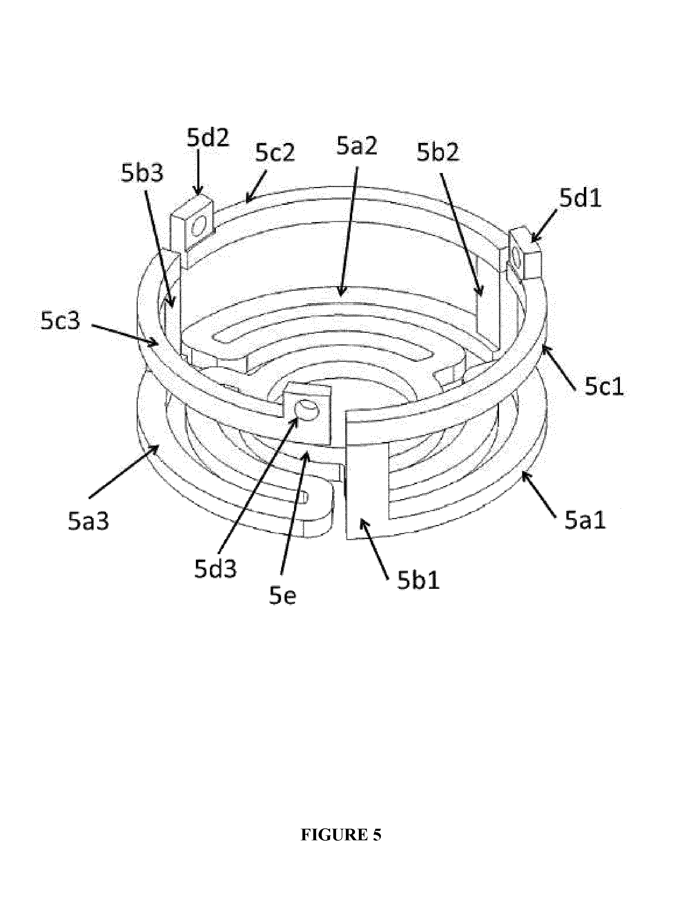

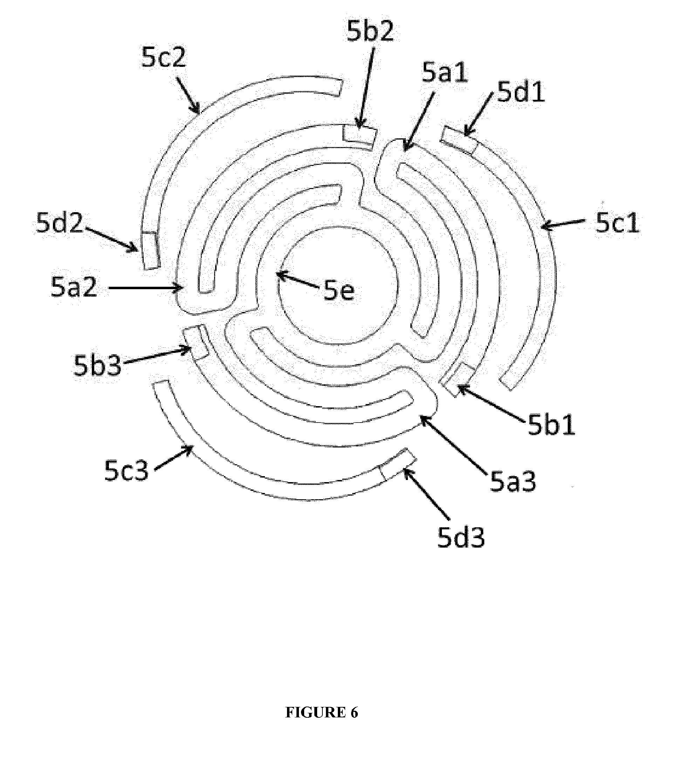

The resistance heater 5 employed here, as illustrated in the assembled appearance drawing and parts drawings of figures 5 and 6, is one with the configuration of a delta hardwired three-phase alternating current circuit having three electrode terminals. The resistance heater 5 of this embodiment has a shape wherein three arms are attached surrounding the outer side of a ring, in the basal means central heating element 5e disposed on the basal centre of the crucible 4, and the three basal arc shaped heating elements 5a1, 5a2 and 5a3 disposed so as to be along substantially equal parts around the basal outer wall surface of the crucible 4, and are provided extending from this basal central heating element 5e, disposed substantially parallel with the basal arc shaped heating element, and three torso means arc shaped heating elements 5c1, 5c2 and 5c3 disposed so as to be along substantially equal parts on the periphery of the torso outer wall surface of the crucible, and the electrode terminals 5d1, 5d2 and 5d3 are provided connecting the electrodes to the tip termini of the opposite side of the connection heating elements 5b1, 5b2 and 5b3 on the three torso means arc shaped heating elements 5c1, 5c2 and 5c3, having the connecting heating elements 5b1, 5b2 and 5b3 connected to the basal connecting heating elements 5a1, 5a2 and 5a3, and the torso means arc shaped heating elements 5c1, 5c2 and 5c3 extending from each of the tip termini of the basal means arch shaped elements 5a1, 5a2 and 5a3. Then, the three phase alternating current circuit is formed by these three electrodes 6a, 6b and 6c being connected to these electrode terminals.

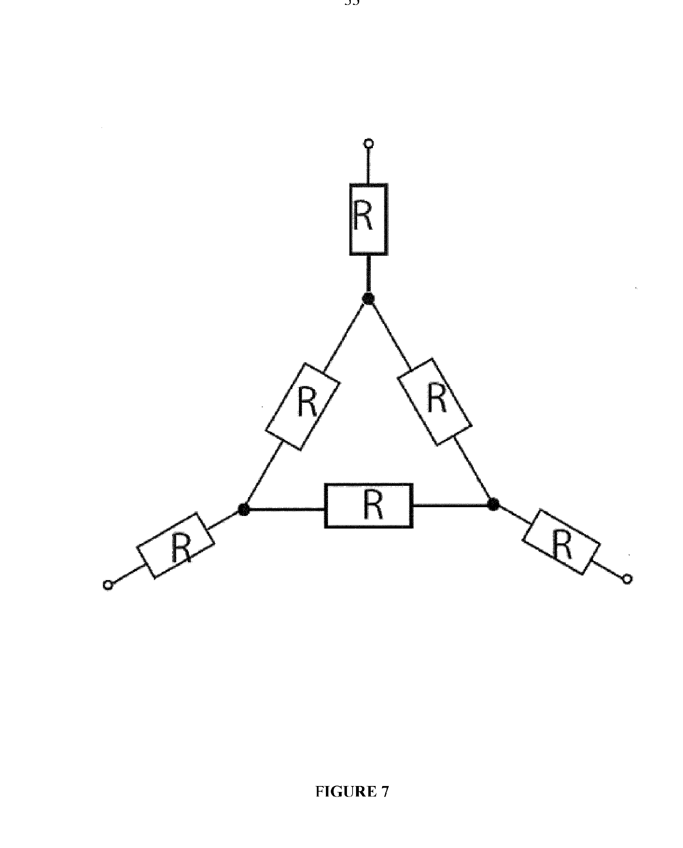

The electrical circuit of this heater is as shown in figure 7, and the 3 terminals are connected to the 50 Hz or 60 Hz three-phase electrical current power supply. As a result, not only does this heater generate heat by resistance heating, the revolving magnetic field reaches to the interior of the crucible, enabling the stirring of the melt in the crucible. Moreover, in the resistance heater of the embodiment above, the basal centre of the crucible has three arm means disposed so as to surround the basal central heating element 5e disposed on the basal centre of the crucible in order to further increase the heating capacity, but the basal central heating elements 5e may be annular shaped or disc shaped, and may be provided extending from those basal means arc shaped heating elements. Moreover, as the basal centre heating elements 5e extending radially in three directions from the centre point of the centre, a resistance heater forming a Y hard wired type three-phase alternating current circuit may be employed.

In this purification device, by means of a numerical simulation of the magnetic field distribution, in respect of the maximal power induction point required in the operations of the refining, the mean magnetic field strength B of the interior of the crucible is preferably designed so as to satisfy the condition of having a Reynolds number of less than 600 as computed by the equation (6), based on equations (4) and (5). The reason for this is that, in general, the maximal inducted electrical power is on the occasion of initially fusing the raw material which is the subject of purification, and thereafter, the power of the operations on the occasion of the purification carried out over the order of several tens of hours is a lower power of the order of 70% of that. Now, after the purified melt is exhausted, this purification device has a melt exhausting function provided enabling processing for the addition of raw material to the empty crucible, enabling the continuous performance of purification presses multiple times in one crucible.

In this context, in relation to the resistance heater, the magnetic fields generated from each heating element cancel each other out, and because the strength of the magnetic fields acting on the melt can be reduced, when the distance is h between the centre of the cross-section of the basal means arc shaped heating element and the centre of the cross-section of the torso means arc shaped heating element, and the radius of the centre line circle formed joining the centres of the cross sections of the three torso means arc shaped heating elements is a, preferably h/a is less than 0.3, in addition to the distance between the basal means arc shaped heating element and the torso means arc shaped heating element being greater than 20 mm. The reason why h/a is less than 0.3 here is described below. Moreover, the reason why the distance between the basal means arc shaped heating element and the torso means arc shaped heating element is greater than 20 mm here is because when the distance between the heating elements becomes less than this, electrical discharges may be generated.

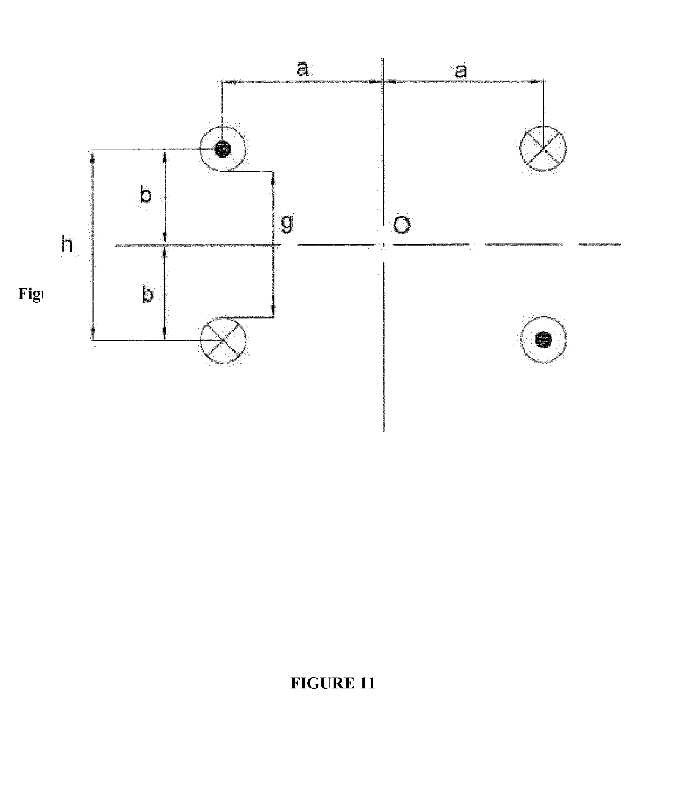

Firstly, the magnetic field generated by means of the electrical current flowing in the torso means arc shaped heating element and the basal means arc shaped heating element are part of a magnetic field generated by means of two circular currents having the same axis, and can be estimated based on the vertical cross-section drawing in respect of the centre axis of the heater represented in figure 11. Here, the torso means arc shaped heating element 5c1, and the basal means arc shaped heating element 5a1 represented on the left side of the axis, and 5c1' and 5a1' are represented in mirror style on the right side of the central axis, and current flows to the basal back side to the surface side in 5c1, and 5a1', and the current flows from the basal surface side to the rear side in 5a1 and 5c1'

Here, a is the radius of the centre circle formed connecting the respective centres in respect of the cross-section of the basal means arc shaped heating element and the torso means arc shaped heating element. Moreover, b is half of the distance h between the cross-section centre of the torso means arc shaped heating element and the basal means arc shaped heating element, and O represents a position equidistant from the two heating elements on the centre axis. In this type of disposition, the magnetic field strength B(z) of a place at a distance z from the point, or on the centre axis, is known to be represented by approximation of the following equation when the current flowing in the heating element is I, and the magnetic permeability of the vacuum is $\mu_0$ (Refer to H.E. Knoepfel, "Magnetic Fields: a comprehensive theoretical treaties and practical use", (2000), Wiley-Interscience p.96)

$$B(z) = \mu_0 I \frac{3a^2 b}{(a^2 + b^2)^{\frac{5}{2}}} |z|$$

Here, if x = b/a, the magnetic field strength B(z) based on the equation above is represented in the form of the following proportional expression:

$$B(z) \propto \frac{x}{(1+x^2)^{\frac{5}{2}}} |z|$$

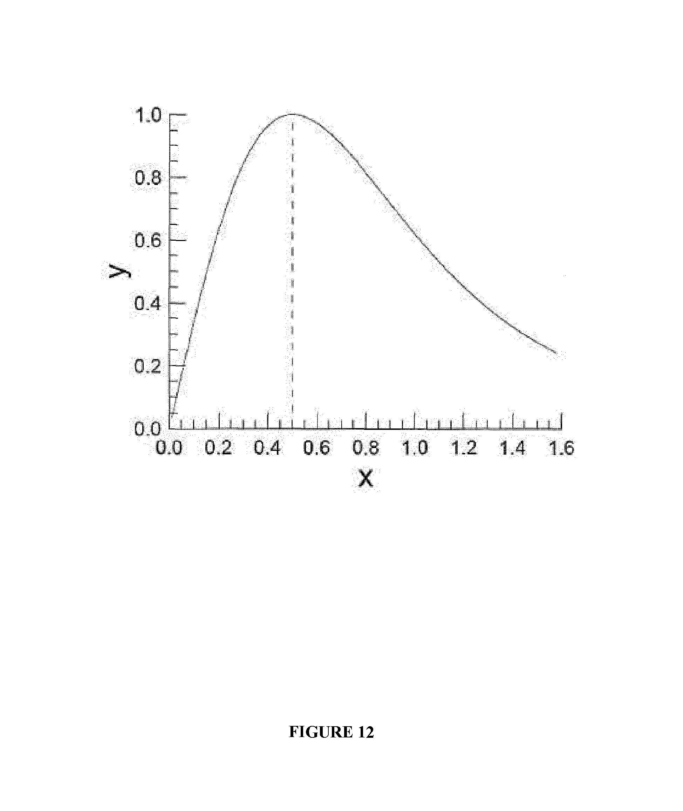

Moreover, Figure 12 represents a standardization as y(x) of the maximal value 0.2862 of the multiplier z on the right side of the function x/(1 + x ^ 2) ^(5/2) in the formula above. Because this function y(x) has a maximal value of 0.5, it can be appreciated that in the disposition of the heat generator where the value of x is 0.5 the magnetic field strength is maximized. In other words, in order to suppress the magnetic field generated in the interior of the crucible, it can be appreciated that it is vital to avoid the condition where b/a = 0.5. For this purpose, making b greater, or making the distance h (= 2b) between the two arc shaped heaters greater would suffice, but for that purpose, space in order to store the heaters in the furnace would be required, and that would uneconomic in both facilities and thermal efficiency terms. Therefore, in the present invention, a method of making the distance h between the heat generation elements smaller was employed. Moreover, in order to sufficiently express the magnetic field suppression effect, it is sufficient to make x less than half of the maximal value of the function y(x), more preferably less than 1/3, and those conditions corresponds to the h/a values of less than 0.3 and 0.2, respectively.

However, when the distance between the heating elements become smaller, there is the occurrence of electrical discharges between the heat generation elements, and because this generates the problem of damage to the heater elements, it is necessary to secure a distance g between the heater elements of greater than 20 mm. Moreover, as already described above, the smaller the Reynolds number, the lesser the erosion of the crucible, but in order to secure the stirring function of the melt, because the inertial forces working on the melt exceed the viscous forces, and from the definition of the Reynolds number, (Re = inertial forces/viscous forces), that value should preferably be greater than 10.

**Examples**

Hereafter, the present invention is explained in detail by examples and comparative examples, but the present invention is not limited to the following examples.

Comparative example 1

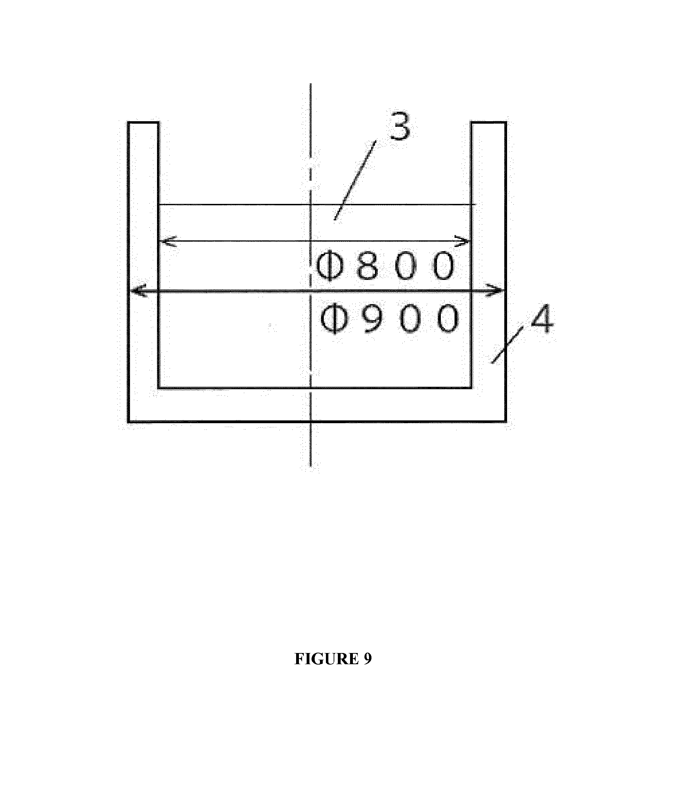

As a comparative example of the present invention, in a purification device with the symmetrical type revolving axis configuration represented in figure 4, 400 kg of metallic silicon were used as the raw material melt for purification. The crucible used here was that shown in figure 9, with an outer diameter of 900 mm, an inner diameter of 800 mm, and the material thickness of 50 mm in a cylinder type embodiment, and the materials thereof were graphite. When 400 kg of melt were inserted the depth of the melt was 320 mm. The heaters used were the Delta hardwired type illustrated in figure 5 and 6, which had graphite type heating elements, and the distance h between the centre of the cross-section of the basal means arc shaped heating element and the centre of the cross-section of the torso means arc shaped heating element was h = 350 mm, moreover, the radius a of the centre line circle formed joining the centres of the cross sections of the three torso means arc shaped heating elements was a = 600 mm (h/a = 0.58), and the resistance used between the adjacent elements was 0.012 Ohms. In addition, a 60 Hz three-phase current was used as the power source.

When the phosphorus was evaporated in the purification conditions from the raw material silicon melt in this furnace, the power needed to sustain the temperature in the purification of the melt was 100 kW. Moreover, in respect of the operations at a power of 100 kW, the value of the current flowing in the heater was 2890 A. Based on this current value of 2890 A, the numerical simulation derived for the electromagnetic field resulted in a mean value of B for the magnetic field strength of 26.3 Gauss, and the theoretically assumed revolving angular velocity value $\Omega_c$ for the melt assumed from equation (6) was 7.7 rpm (= 0.81 rad/sec).

In respect of this purification device, after the fusion of the metallic silicon raw material inserted to the crucible, and the elevation of the temperature of the melt to a specific temperature, the vacuum state in the furnace was sustained for 10 hours, and the impurities such as phosphorus in the silicon melt were evaporated, and after repression rise a of the furnace. Thereafter, the processed melt was exhausted from the crucible to complete the purification of the 400 kg of raw material. Thereafter, more silicon raw material was charged to the empty crucible, and this was completely refused, and once more the 400 kg of melt were sustained as the specific temperature for 10 hours in a vacuum state, and thereafter, the exhaustion processes were repeated (n - 1) times, and after completing the purification of a total of 400x n (kg) of metallic silicon, the series of operations were terminated by the cooling off of the furnace. Here, in correspondence to the number of charges, and a total of five standard operations were performed with 4, 8, 12, 16 and 20 charges.

The actual measured revolving angular velocity $\Omega$ by observing the floating matter on the surface of the melt during their refining in these five standard conditions did not vary, and was approximately 7.7 r.p.m. (= 0.81 rad/sec). Because the dynamic viscosity coefficient of the silicon melt was 3.4 x 10^{-7} (m^2/sec), the Reynolds number Re in these conditions based on equation (2) was computed to be 616. Therefore, the value of the Re exceeded the required conditions value of 600 for this invention.

The maximal values for the wear conditions of the internal surface of the crucible extracted after each of the five standard operations were investigated from the reduction amount in the material thickness of the crucible base surface, and the depth of the indentation is generated by means of the erosion. The results are the situation represented in Table 1.

Table 1

| Number of charges n | Total weight of processed raw material W (Kg) | Mean erosion of the crucible bottom surface d (mm) | Maximum values for the indentation depths h (mm) |
|---|---|---|---|
| 4 | 1600 | 1.8 | 2.0 |
| s | 3200 | 3.6 | 3.9 |
| 12 | 4800 | 5.4 | 8.5 |
| 16 | 6400 | 7.2 | 17.3 |
| 20 | 8000 | 9.0 | 32.5 |

The amount of the erosion for one charge did not depend much on the number of charges n, and was of the order of 0.4 mm. There was a clear trend for an exponential increase in the depth of the indentations in tandem with the increase in the number of charges, and after 20 operational charges, the depth of the indentations was 32 mm, which exceeded half of the material thickness of the crucible. In calculating the growth ratio of the indentations, it was 1.19 times for each charge. Moreover, when the concentration of phosphorus was measured in the raw material after purification, in the case of all of the charges of raw material, all of the charges satisfied the required condition of a concentration of less than 1 ppmw for use as solar cell raw material.

(Example 1)

In Example 1 of the present invention, in respect of the same device illustrated in figure 4 for comparative example 1, in relation to just the heater, each of the heating elements were made fine, and the cross-sectional area was reduced by 16%, such that the resistance value between the terminals was increased by $0.014\Omega$, and the other features were exactly the same configuration as in comparative example 1 and five operations were performed at the same five standards as the comparison example.

In these operations, the electrical power to sustain the required temperature in the purification of the melt was almost the same as the 100 kW in the comparative example 1, at that time, the value of the current flowing in the heater was 2670 A. With this current value of 2670 A as the base, and numerical simulation of the electromagnetic field was derived, and the mean magnetic field strength B in the melt was 24.3 Gauss. The theoretical assumed value $\Omega c$ for the revolving angular velocity of the melt predicted by equation (6) was 7.1 r. p.m. (0.74 rad/sec).

Actual measured revolving angular velocity $\Omega$ by observing the floating matter on the surface of the melt during their refining in these five standard conditions did not vary, and was approximately 7.1 r.p.m. (= 0.74 rad/sec). The Reynolds number Re in these conditions based on equation (2) was computed to be 591. Therefore, the value of the Re exceeded the required conditions value of 604 for this invention. The maximal values for the wear conditions of the internal surface of the crucible extracted after each of the five standard operations were investigated from the reduction amount in the material thickness of the crucible base surface, and the depth of the indentation is generated by means of the erosion just as in comparative example 1. The results are the situation represented in Table 2. The amount of the erosion for one charge did not depend much on the number of charges n, and was of the order of 0.4 mm. There was a slight generation of indentations observed but no trend was observed in the progression of the sizes thereof, and the erosion was at about half.

Table 2

| Number of charges n | Total weight of processed raw material W (Kg) | Mean erosion of the crucible bottom surface d (mm) | Maximum values for the indentation depths h (mm) |
|---|---|---|---|
| 4 | 1600 | 1.5 | 0.8 |

(continued)

| Number of charges n | Total weight of processed raw material W (Kg) | Mean erosion of the crucible bottom surface d (mm) | Maximum values for the indentation depths h (mm) |
|---|---|---|---|
| 8 | 3200 | 3.0 | 1.7 |
| 12 | 4800 | 4.6 | 2.4 |
| 16 | 6400 | 6.1 | 3.2 |
| 20 | 8000 | 7.6 | 4.0 |

Moreover, when the concentration of phosphorus was measured in the raw material after purification, in the case of all of the charges of raw material, all of the charges satisfied the required condition of a concentration of less than 1 ppmw for use as solar cell raw material, and there were no problems in the purification.

(Example 2)

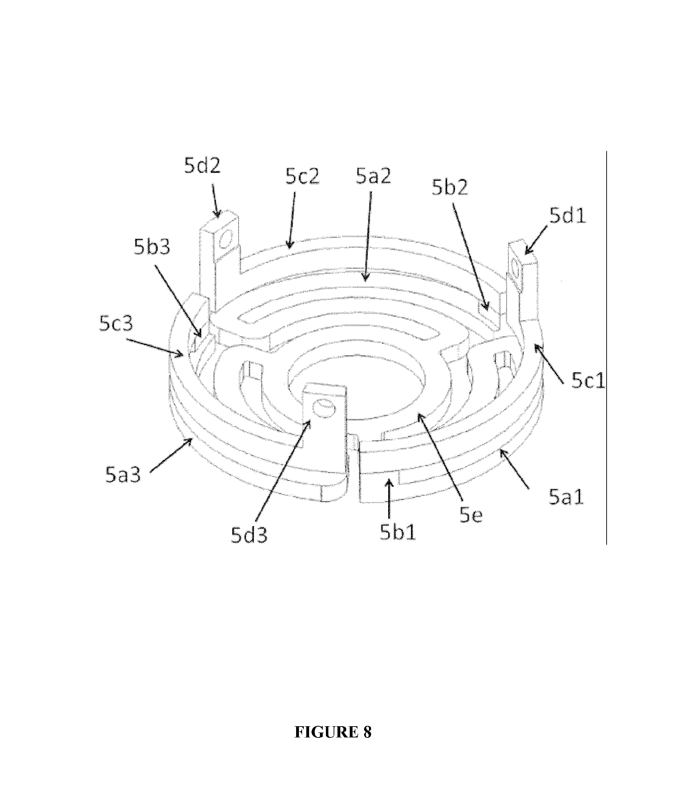

In Example 2 of the present invention, in respect of the same device illustrated in figure 4 for comparative example 1, in relation to just the heater, the length of the connected heating element part (5b1, 5b2 and 5b3 in figure 5) was foreshortened, and distance h between the centre of the cross-section of the basal means arc shaped heating element and the centre of the cross-section of the torso means arc shaped heating element was h = 120. Moreover, the radius a of the centre line circle formed joining the centres of the cross sections of the three torso means arc shaped heating elements was a = 600 mm, and by enabling h/a = 0.20, the resistance value was held at 0.012 Ohms, generating a weakened magnetic field, and the specific shape of the resistance heater was that shown in Figure 8. In other words, this resistance heater was characterised by having foreshortened connection heating elements 5b1, 5b2 and 5b3 compared with the heater represented in figure 5. Moreover, the position of the electrode terminals 5d1, 5d2 and 5d3 was characteristically oriented in the vertical direction. Then, other than the heater, the configuration was exactly the same as in comparative example 1, and the same 5 standard operations were performed as in comparative example 1.

In these operations, the electrical power to sustain the required temperature in the purification of the melt was almost the same as the 100 kW in example 1, at that time, the value of the current flowing in the heater was 2890 A.

With this current value of 2890 A as the base, and numerical simulation of the electromagnetic field was derived, and the mean magnetic field strength B in the melt was 22.5 Gauss, The measured crucible surface magnetic field strength when a current of 2890 A flowing in the cold heater was 22.5 gauss.. The theoretical assumed value $\Omega c$ for the revolving angular velocity of the melt predicted by equation (6) was 6.5 r. p.m. (0.68 rad/sec). The actual measured revolving angular velocity $\Omega$ by observing the floating matter on the surface of the melt during their refining in these five standard conditions did not vary, and was approximately 6.5 r.p.m. (= 0.68 rad/sec). The Reynolds number Re in these conditions based on equation (2) was computed to be 566.

The maximal values for the wear conditions of the internal surface of the crucible extracted after each of the five standard operations were investigated from the reduction amount in the material thickness of the crucible base surface, and the depth of the indentation is generated by means of the erosion just as in comparative example 1. The results are the situation represented in Table 3. The amount of the erosion for one charge did not depend much on the number of charges n, and was of the order of 0.4 mm. There was a slight generation of indentations observed but no trend was observed in the progression of the sizes thereof, and the erosion was at about half.

Table 3

| Number of charges n | Total weight of processed raw material W (Kg) | Mean erosion of the crucible bottom surface d (mm) | Maximum values for the indentation depths h (mm) |
|---|---|---|---|
| 4 | 1600 | 1.6 | 0.8 |
| 8 | 3200 | 3.2 | 1.5 |
| 112 | 4800 | 4.6 | 2.2 |
| 16 | 6400 | 6.4 | 3.2 |
| 20 | 8000 | 7.8 | 4.1 |

Moreover, when the concentration of phosphorus was measured in the raw material after purification, in the case of all of the charges of raw material, all of the charges satisfied the required condition of a concentration of less than 1 ppmw for use as solar cell raw material, and there were no problems in the purification.

(Example 3)

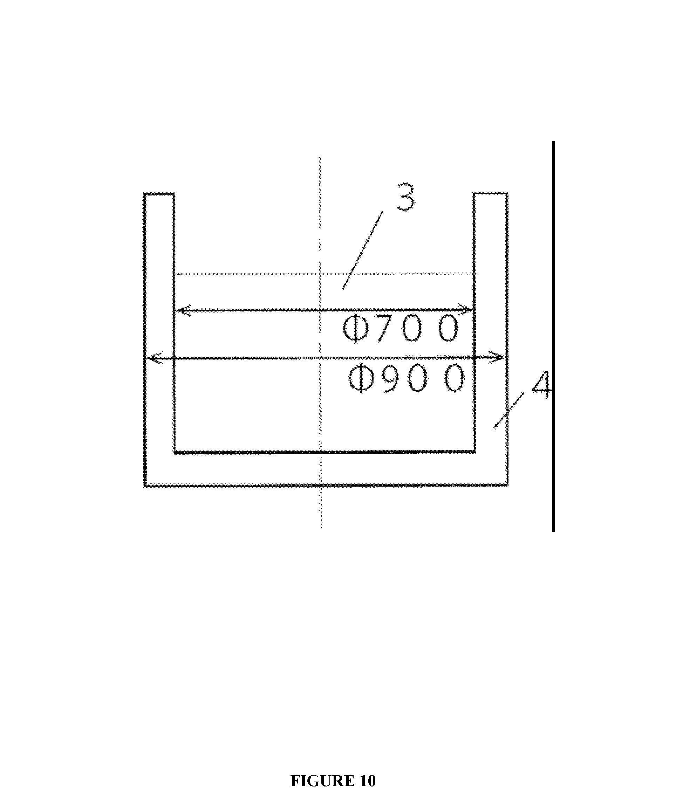

As example 3 of the present invention, in the configuration of the purification device as represented in Figure 4, the crucible is replaced by an isotropic cylinder of crucible as illustrated in Figure 10 with an outer diameter of 900 mm and an internal diameter of 700 mm and the purification of 310 kg of metallic silicon was performed.

The depth of the melt in the crucible wherein 310 kg of melt was inserted was 320 mm. The heater was the same as the one in the comparative example and was a delta hard wired configuration as illustrated in Figures 5 and 6. The power source used was a 60 Hz three phase commercial supply. When the phosphorous was evaporated from the raw material silicon in the purification in this furnace, the power required to sustain the temperature in the purification of the melt was 112 kw.

Moreover, in operations with a power of 112 kW, the current flowing in the heater was 3060 A. With this current value of 3060 A as the base, and numerical simulation of the electromagnetic field was derived, and the mean magnetic field strength B in the melt was 30.0 Gauss. The theoretical assumed value $\Omega c$ for the revolving angular velocity of the melt predicted by equation (6) was 8.7 r. p. m. (0.91 rad/sec).

In this purification device, after the metallic silicon in the crucible was fused, and after the temperature of the melt was elevated to a specific temperature, the vacuum conditions in the furnace were sustained for 10 hours, and the impurities such as phosphorous and the like were evaporated from the silicon melt, then the furnace was repressurized, and the processed melt was exhausted from the crucible to complete the purification of 310 kg of raw materials.

Thereafter, additional silicon raw material was charged to the empty crucible, this was fused completely, and heated once more to a specific temperature such that the 310 kg of melt was held for 10 hours in a vacuum state, and after exhaustion process thereof was repeated (n-1) times, and a total of 310 x n (Kg) of metallic silicon was purified, it was removed from the furnace, in the completion of a series of operations. Here, n corresponds to the number of and a total of five standard operations were performed with 4, 8, 12, 16 and 20 charges. The actual measured revolving angular velocity $\Omega$ by observing the floating matter on the surface of the melt during their refining in these five standard conditions did not vary, and was approximately 8.7 r.p.m. (= 0.91 rad/sec). Because the dynamic viscosity coefficient of the silicon melt was $3.4 \times 10^{-7}$ (m2/sec), the Reynolds number Re in these was computed to be 573.

The maximal values for the wear conditions of the internal surface of the crucible extracted after each of the five standard operations were investigated from the reduction amount in the material thickness of the crucible base surface, and the depth of the indentation is generated by means of the erosion. The results are the situation represented in Table 4.

Table 4

| Number of charges n | Total weight of processed raw material W (Kg) | Mean erosion of the crucible bottom surface d (mm) | Maximum values for the indentation depths h (mm) |
|---|---|---|---|
| 4 | 1240 | 1.6 | 0.7 |
| 8 | 2480 | 3.2 | 1.7 |
| 12 | 3720 | 4.6 | 2.3 |
| 16 | 4960 | 6.4 | 3.1 |
| 20 | 6200 | 7.6 | 3.9 |

The amount of the erosion for one charge did not depend much on the number of charges n, and was 0.4 mm, there was a slight generation of indentations observed but no trend was observed in the progression of the sizes thereof, and the erosion was at about half. Moreover, when the phosphorous content of the purified raw material was measured, all of the charges had phosphorous concentrations of less than 1 ppmw, sufficient to be usable as raw material for solar cells, and there were no problems with the purification.

**Reference Numerals**

| | |
|---|---|
| 1 | The vacuum pump |
| 2 | Vacuum vessel |
| 3 | Molten raw material liquid |
| 4 | The crucible |
| 5 | The resistance heater |
| 5e | The base central heater element |
| 5a1, 5a2, 5a3 | The basal means arc shaped heater element |
| 5b1, 5b2, 5b3 | The contact heater element |
| 5c1, 5c2, 5c3 | The torso means arc shaped heater element |
| 5d1, 5d2, 5d3 | The electrode terminal |
| 6 | The heater electrode |
| 6a, 6b, 6c | The electrodes |
| 7 | The thermal insulation material |
| 8 | The gas exhaust port |
| 9 | The electrode port |
| 10 | The crucible pedestal |
| 11 | The power source of the heater |

**Claims**

1. A purification method of metal or semiconductor fused liquid performing purification while stirring the metal or semiconductor fused liquid, contained in a crucible heated by a heater disposed so as to surround the outer wall of the crucible by means of a magnetic field, **characterized by** performing so as not to exceed a Reynolds number Re value of 600 as represented by the following equation (2), when the dynamic viscosity coefficient of the fused liquid is v (m$^2$/sec.), the radius of the liquid surface of the fused liquid is R (m), and the rotational angular velocity of the fused liquid is $\Omega$ (rad/sec.):

$$Re = R \times (\Omega/v)^{\wedge}(1/2) \cdots (2)$$

2. The purification method of metal or semiconductor fused liquid according to claim 1 **characterized by** performing so as not to exceed a Reynolds number Re value of 600 as represented by the following equation (2'), deriving the theoretical presumed value $\Omega c$ of the revolving angular velocity of the fused liquid represented by equation (6) below, based on the mean value of the magnetic field strength in the fused liquid of B (Tesla), the revolutions of the revolving magnetic field $\Omega b$ (rpm), the radius of the liquid surface of the fused liquid is R (m), the dynamic viscosity coefficient of the fused liquid is v (m$^2$/sec.), the electrical conductivity of the fused liquid is $\sigma(1/\Omega m)$ and the density of the fused liquid $\rho(Kg/m^3)$, based on the representative velocity V represented in equation (5) below:

$$V = \Omega b \times R \times ((\sigma B^{\wedge}2)/(16 \times \Omega b \times \rho))^{\wedge}(1/2) \cdots (5)$$

$$\Omega c = (V/R) \times (0.88 \times Ln(V \times R/v) + 1) \cdots (6)$$

$$Re = R \times (\Omega c/v)^{\wedge}(1/2) \cdots (2')$$

3. The purification method of metal or semiconductor fused liquid according to claim 1 or 2, **characterized by** the addition of the operation of reversing the revolving direction of the fused liquid in the crucible at any interval.

4. A vacuum purification device disposing a crucible for the insertion thereto of the subject of purification comprising metal or a semiconductor, and a resistance heater heating and fusing the subject of purification in said crucible holding said crucible and having a circular aperture means, and thermal insulation materials disposed so as to surround the periphery of said resistance heater all disposed in a vacuum vessel, **characterized by** said resistance heater being provided extending from a central heating element disposed on the basal centre of the crucible, and having three basal means arc-shaped heating elements disposed so as to be along substantially three equal parts around the basal means outer wall surface of the crucible, and three torso means arc-shaped heating elements disposed so as to be along three equal parts of the torso means outer wall surface and disposed substantially parallel to the basal means arc-shaped heating elements, and mutually connected heating elements connecting each of the basal means connected heating elements and the torso means arc-shaped heating elements provided extending from the tip terminals of the basal means arc-shaped heating elements, and the three torso means arc-shaped heating elements are provided with electrode terminal connecting the electrodes to the tip terminal of the opposite side to the respective connection heating elements forming a three-phase current circuit, and moreover, with a distance h between the centre of the horizontal cross section of the basal means arc-shaped heating elements and the centre of the horizontal cross section of the torso means arc-shaped heating elements, and a radius a of the center line circle formed connecting the center of the cross sections of the three torso means arc-shaped heating elements, then h/a is less than or equal to 0.3, in addition to the distance between the basal means arc-shaped heating elements and the torso means arc-shaped heating elements being equal to or greater than 20 mm.

**FIGURE 1**

**FIGURE 2**

**FIGURE 3**

**FIGURE 4**

**FIGURE 5**

**FIGURE 6**

**FIGURE 7**

**FIGURE 8**

**FIGURE 9**

**FIGURE 10**

**FIGURE 11**

**FIGURE 12**

## INTERNATIONAL SEARCH REPORT

| | International application No. |
|---|---|
| | PCT/JP2012/052647 |

**A. CLASSIFICATION OF SUBJECT MATTER**
*C01B33/037*(2006.01)i

According to International Patent Classification (IPC) or to both national classification and IPC

**B. FIELDS SEARCHED**

Minimum documentation searched (classification system followed by classification symbols)
C01B33/00-33/193

Documentation searched other than minimum documentation to the extent that such documents are included in the fields searched
Jitsuyo Shinan Koho        1922-1996   Jitsuyo Shinan Toroku Koho   1996-2012
Kokai Jitsuyo Shinan Koho  1971-2012   Toroku Jitsuyo Shinan Koho   1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2006-232658 A  (Nippon Steel Corp.),<br>07 September 2006 (07.09.2006),<br>claims; paragraphs [0017], [0020], [0022],<br>[0027]; fig. 1 to 3<br>(Family: none) | 1-3<br>4 |
| Y<br>A | JP 10-212113 A  (Kawasaki Steel Corp.),<br>11 August 1998 (11.08.1998),<br>paragraph [0012]<br>& EP 855367 A1 | 1-3<br>4 |
| Y<br>A | JP 10-182138 A  (Kawasaki Steel Corp.),<br>07 July 1998 (07.07.1998),<br>claim 2; paragraph [0010]<br>(Family: none) | 3<br>1,2,4 |

☐ Further documents are listed in the continuation of Box C.          ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>    26 April, 2012 (26.04.12) | Date of mailing of the international search report<br>    15 May, 2012 (15.05.12) |
|---|---|
| Name and mailing address of the ISA/<br>    Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H1025190 B
- WO 2008031229 A
- JP 2005231956 A
- JP 2006315879 A
- JP 2007315879 A
- JP H09309716 B
- JP 2005281085 A

### Non-patent literature cited in the description

- **J. SZEKELY.** Fluid Flow Phenomena in Material Processing. Academic Press, 1979, 191
- Revolving magnetic field devices. *Shigeo ASAI, An introduction to magnetic materials processing,* 2000
- **J.R. DAVISET.** *IEEE Trans. Elec. Dev. ED27,* 1980, 677
- **N. YUGE et al.** *Solar Energy Materials and Solar Cells,* 1994, vol. 34, 243
- **H. P. GREENSPAN.** The theory of rotating fluids. Cambridge Univ. Press, 1966
- **P. J. THOMAS ; F. ZOUESHTIAGH.** *J. Eng. Math.,* 2007, vol. 57, 317
- **P.A. DAVIDSON ; J. C. R. HUNT.** *J. Fluid Mech.,* 1987, vol. 185, 67
- **H.E. KNOEPFEL.** Magnetic Fields: a comprehensive theoretical treaties and practical use. Wiley-Interscience, 2000, 96